# EUROPEAN PATENT APPLICATION

(11) **EP 4 834 748 A1**
(43) Date of publication of application: **04.11.2026**
(21) Application number: 25174050.2
(22) Date of filing: 02.05.2025
(51) Int. Cl.: B64C 1/12, B64F 5/10, B64F 5/40

(54) **AN AIRCRAFT EXTERNAL FUSELAGE SKIN PANEL SYSTEM**

(71) Applicant: Technical Engineering & Tooling Services Ltd., County Westmeath N91 CX80 (IE)
(72) Inventor: Hunt, John, Mullingar (IE); Hamilton, John, Mullingar (IE)
(74) Representative: FRKelly

(57) **Abstract**

An aircraft external fuselage skin panel system is provided for protecting a portion of the aircraft external fuselage skin from damage. The panel system comprises a panel having a planar body. The panel is connectable to the fuselage skin over the portion of fuselage skin requiring protection. The panel is contoured such as to conform to the portion of fuselage skin.

## Description

### Field of invention

This invention relates to an aircraft external fuselage skin panel system, in particular for use in protecting a portion of an aircraft fuselage.

### Background of the invention

Aircraft have an external fuselage skin which can be damaged during use, specifically damage may be caused by ground support equipment. The area aft of the door and in particular the left-hand or aft door of the plane may be prone to damage caused by ground equipment, for instance access stairs, accidentally and/or repeatedly bumping into this part of the aircraft fuselage.

Repeated instances of minor damage to a small area of the fuselage can become problematic. Multiple instances of damage, though individually within allowable limits, may collectively exceed those limits. When damage occurs that exceeds allowable limits, repairs become necessary in accordance with the A/C structural repair manual. The repairs may require skin doubler installations to restore structural integrity. Analysing the damage and taking corrective action is a time consuming and expensive process. The repairs may also be complex and require access to both internal and external skin areas. Typically, the last two rows of seats must be removed and the aft galley repositioned forward for interior access. Depending on the aircraft configuration, lavatories may also need removal. During galley or lavatory removal, further issues with the floor structure may be uncovered, adding additional complexity to the repair as well as unscheduled floor structure repairs.

A technical assessment is required to determine if the fuselage has been damaged. This assessment involves: stripping the paint from the affected area for thorough visual inspection; removing fasteners within a 15mm radius of the damage and testing the open holes to ensure no defects; performing internal and external High-Frequency Eddy Current inspections using Roto nondestructive testing; measuring using low-frequency eddy current the skin nominal thickness and minimum remaining thickness in blended out areas; and finally inspecting for nicks, gouges, or additional surface irregularities. Dent mapping is typically also undertaken. Multiple skin thicknesses which occur in certain parts of the fuselage may also make a repair more complex.

When damage is identified and requires repair outside of scheduled maintenance several challenges arise including: the aircraft being removed from service while technical assessments are performed and repair evaluation; a replacement aircraft from the fleet must be sourced or a wet lease replacement arranged, if available; secure hangar space and staff for repair execution must be obtained.

The financial impact of the repairs can be significant. Typically, 10-120 hours of labour are required to remove, refit, and test the aft galley, as well as 48 hours to perform the repair itself. Assessment costs also include 1-3 days for a response and subsequent Repair and Design Approval Form (RDAF) issuance. There is also a daily cost of the aircraft which can be approximately $100,000. Hangar availability and staff alignment delays can also add to the costs. Airlines currently face substantial costs, including repair expenses, passenger compensation, and potential wet lease replacement fees.

It is an object of the present invention to provide an improved way of protecting the aircraft external fuselage skin which addresses some of the above mentioned problems of the prior art or at least to provide the public with a useful choice.

### Summary of the invention

According to a first aspect of the invention an aircraft external fuselage skin panel system for protecting a portion of the aircraft external fuselage skin from damage is provided. The panel system comprises a panel having a planar body. The panel is connectable to the fuselage skin over the portion of fuselage skin requiring protection. The panel is contoured such as to conform to the portion of fuselage skin.

Preferably, the panel is removably connectable to the fuselage skin.

Preferably, the panel system further comprises at least one connection means.

Preferably, the connection means comprises a bracket.

Preferably, the bracket is an anchor nut.

Preferably, the connection means comprises one or more fasteners.

Preferably, the connection means comprises a first fastener that is connectable through the bracket, a stringer, the fuselage skin, and the panel.

Preferably, the connection means further comprises a mounting plate positionable between the bracket and stringer, wherein the first fastener is connectable through the mounting plate.

Preferably, the connection means comprises at least one rivet configured to connect the fuselage skin, the stringer and the mounting plate.

Preferably, the connection means comprises a second fastener that is connectable through the bracket and the mounting plate.

Preferably, the panel comprises at least one chamfered edge.

Preferably, at least one of the chamfered edges is a leading edge of the panel.

According to a second aspect of the invention an aircraft comprising a panel system according to the first aspect is provided. The panel system is connected to a portion of an aircraft fuselage skin.

Preferably, the panel system is connected to the portion of the aircraft external fuselage skin adjacent a door of the aircraft.

Preferably, the panel system is connected to the fuselage skin via existing fastener apertures.

### Brief description of the invention

The present invention will now be described with reference to the accompanying drawings, in which:
- Figure 1a: illustrates an aircraft;
- Figure 1b: illustrates part of an aircraft with a panel system according to an embodiment of the invention;
- Figure 2: illustrates a front view of the panel system of Figure 1
- Figure 3: illustrates an exploded view the panel system of figure 1 attached to the part of the aircraft via a connection means;
- Figure 4: illustrates a top view of the connection means;
- Figure 5: illustrates a cross-sectional view of part of Figure 3;
- Figure 6: illustrates a cross-sectional view of the panel system; and
- Figure 7: illustrates a cross-sectional view of the part of the aircraft attached to the panel system.

### Detailed description of the invention

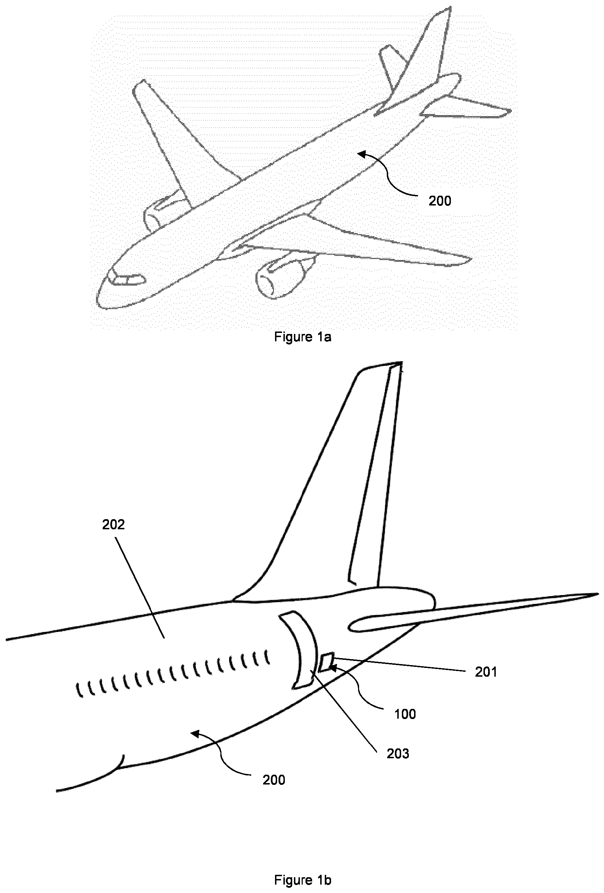

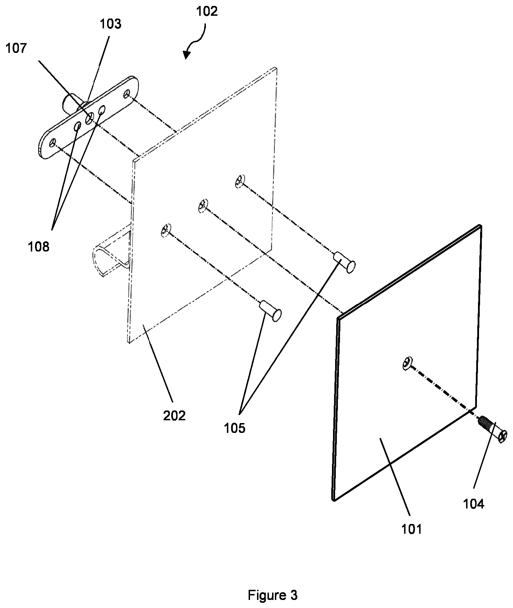

Referring now to Figures 1 to 7 of the accompanying drawings there is illustrated a panel system according to an embodiment of the present invention, generally indicated by arrow 100, for providing an improved way of protecting an aircraft external fuselage skin.

Figure 1 shows an aircraft 200. In some examples the aircraft 200 is a commercial airplane like an Airbus A320 or an airplane in the Airbus narrow body range like a Boeing 737. The panel system 100 for protecting a portion or area 201 of an aircraft external fuselage skin 202 is shown in place on the fuselage skin 202. The panel system 100 may be connected to the portion 201 of the aircraft external fuselage skin 202 adjacent a door 203 of the aircraft 200. In the example of an Airbus A320 the panel system 100 may be connected aft of door 2L, more specifically the panel system 100 may be located between stringers 18L-21L (not shown) and frames FR68 -FR70 (not shown), although any additional or alternative location may be used. The portion 201 may be substantially rectangular, as shown in the Figures. However in other examples the portion 201 may have a different shape, for example square or circular. The panel system 100 may provide protection to the fuselage 201 thereby preventing potential damage and avoiding time and costs associated with analysis and repairs. The panel system 100 may act as a protective barrier or buffer that will absorb most of the damage to this area, particularly by contact from the ground equipment. The panel system 100 may also be more easily replaced than carrying out a repair on a full doubler of an aircraft.

The panel system 100 comprises a panel 101 having a planar body. The panel 101 may be connectable to the fuselage skin 202 over the portion 201 of fuselage skin 202 requiring protection. The panel 101 having an equivalent contour as the portion 201 of the fuselage skin 202. The panel 101 may have three-dimensional contour equivalent to the underlying fuselage skin 202. This may assist in maintaining the aero dynamical features of the aircraft.

In some examples, the panel 101 is removably connectable to the fuselage skin 202. The ability to remove the panel system 100 allows the panel 101 to be removed for fuselage inspection as well as allowing the panel 101 to be replaced and/or repaired easily if it sustains damage. A further advantage is that the aircraft 200 may be returned to its original state, i.e. restored to delivery conditions. The panel system 100 is preferably able to be installed or replaced with access from the external fuselage side only making it easier and less laborious than having to access the internal fuselage.

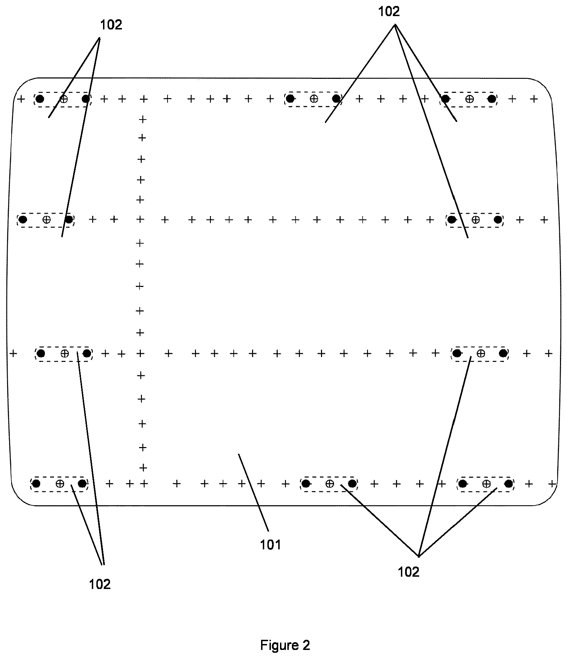

The panel system 101 may further comprise at least one connection means 102. In the example shown, the panel system 101 comprises 10 connection means 102. The connection means 102 may be located around the outer perimeter of the panel 101, as shown in Figure 2. The connection means 102 may comprise a bracket 103. The bracket 103 may be an anchor nut. The anchor nut may comprise a central aperture 107 with two further apertures 108 located on opposite sides of the central aperture. The central aperture 107 and further apertures 108 may be threaded. In other examples, the anchor nut may have a different configuration, for instance it may comprise only one further aperture 108. The connection means 102 may comprise one or more fasteners 104, 105. The connection means 102 may comprise a first fastener 104 that is connectable through the bracket 103, one of the stringers 204, the fuselage skin 202, and the panel 101. The first fastener 104 may be configured to engage with the central aperture 107 of the anchor nut. The connection means 102 may further comprise a mounting plate 106 positioned between the bracket 103 and stringer 204. The first fastener 104 may also be connectable through the mounting plate 106. The connection means 102 may comprise one or more second fasteners 105 that are connectable through the bracket 103 and the mounting plate 106. In the example shown, the connection means 102 comprises two second fasteners 105 configured to engage with the further apertures 108 of the anchor nut. The connection means 102 may comprise at least one rivet 109 configured to connect the fuselage skin 202, the stringer 204, and the mounting plate 106. In the example shown, the connection means 102 comprises two rivets 109 located on either side of the second fasteners 105. The fasteners 104, 105 and rivets 109 may all be co-linear, as shown in the Figures. The first fastener 104 and rivets 109 may connect to the fuselage skin 202, and stringer 204 through existing apertures. Therefore, no drilling through or permanent modification of the fuselage skin 202 and stringer 204 is required.

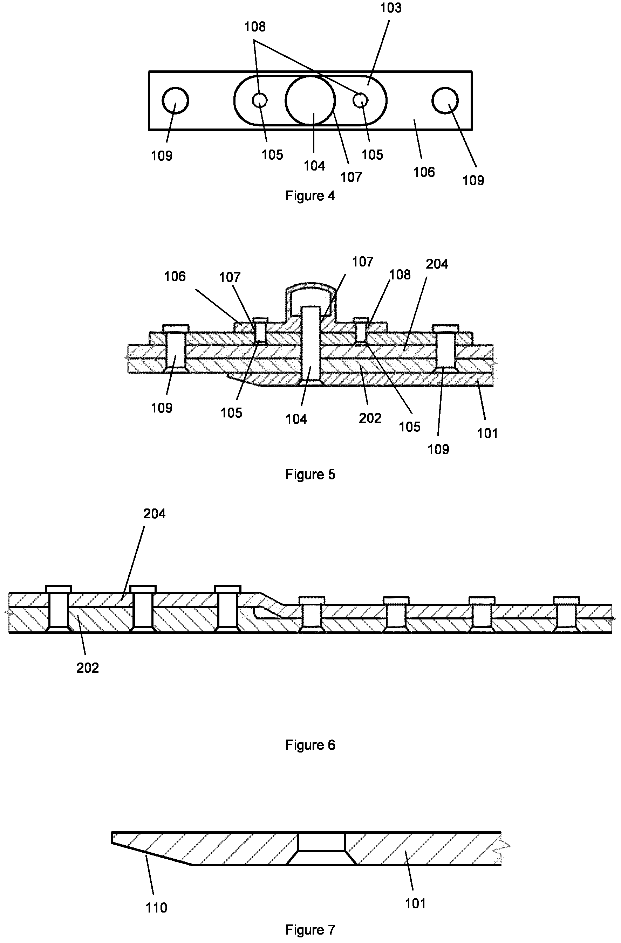

The panel 101 may also comprise a chamfered edge 110 as shown in Figure 7. One or more of the edges may be chamfered and in some examples all four edges of the panel 101 are chamfered. At least one of the chamfered edges may be a leading edge, i.e. an edge closer to the front of the aircraft. The chamfered edge may provide an aerodynamic advantage. In other examples, the panel 101 may have a bevelled or curved edge.

Figure 6 shows fuselage skin 202 and stringer 204 with a plurality of apertures. The connection means 102 can be installed in either the left-most three apertures or the right-most three apertures. The central three apertures would not be an acceptable location for the connection means as the apertures, as well as the fuselage skin 202 and stringer 204, are not horizontally aligned, i.e. they do not have the same height.

Note that a suitable sealant may be applied during installation. The sealant may be applied between the bracket 103 and the stringer 204, between the mating surfaces of the panel 101 and fuselage skin 202, and around all the edges of the panel 101. The sealant may be a polysulfide sealant.

The invention is not limited to the embodiment(s) described herein but can be amended or modified without departing from the scope of the present invention.

### Reference List

- 100: panel system
- 101: panel
- 102: connection means
- 103: bracket
- 104: first fastener
- 105: second fastener(s)
- 106: mounting plate
- 107: central aperture
- 108: further aperture(s)
- 109: rivets
- 110: chamfered edge
- 200: aircraft
- 201: portion of aircraft
- 202: fuselage skin
- 203: door of aircraft
- 204: stringer

## Claims

1. An aircraft external fuselage skin panel system for protecting a portion of the aircraft external fuselage skin from damage, wherein the panel system comprises a panel having a planar body, wherein the panel is connectable to the fuselage skin over the portion of fuselage skin requiring protection, wherein the panel is contoured such as to conform to the portion of fuselage skin.

2. The panel system of claim 1, wherein the panel is removably connectable to the fuselage skin.

3. The panel system of claim 2, wherein the panel system further comprises at least one connection means.

4. The panel system of claim 3, wherein the connection means comprises a bracket.

5. The panel system of claim 4, wherein the bracket is an anchor nut.

6. The panel system of any one of claims 4 or 5, wherein the connection means comprises one or more fasteners.

7. The panel system of any claim 6, wherein the connection means comprises a first fastener that is connectable through the bracket, a stringer, the fuselage skin, and the panel.

8. The panel system of claim 7, wherein the connection means further comprises a mounting plate positionable between the bracket and stringer, wherein the first fastener is connectable through the mounting plate.

9. The panel system of claim 8, wherein the connection means comprises at least one rivet configured to connect the fuselage skin, the stringer and the mounting plate.

10. The panel system of any one of claims 8 or 9, wherein the connection means comprises a second fastener that is connectable through the bracket and the mounting plate.

11. The panel system of any one of claims 1 to 10, wherein the panel comprises at least one chamfered edge.

12. The panel system of claim 11, wherein at least one of the chamfered edges is a leading edge of the panel.

13. An aircraft comprising a panel system according to any one of claims 1 to 12, wherein the panel system is connected to a portion of an aircraft fuselage skin.

14. An aircraft according to claim 13, wherein the panel system is connected to the portion of the aircraft external fuselage skin adjacent a door of the aircraft.

15. An aircraft according to claim 14, wherein the panel system is connected to the fuselage skin via existing fastener apertures.
